(19) Europäisches Patentamt
European Patent Office
Office européen des brevets

(11) Publication number: **0 100 918 A1**

(12) # EUROPEAN PATENT APPLICATION

(21) Application number: 83106992.7

(51) Int. Cl.³: C 08 K 5/07

(22) Date of filing: 16.07.83

(30) Priority: 26.07.82 US 402208

(43) Date of publication of application: 22.02.84 Bulletin 84/8

(84) Designated Contracting States: DE NL

(71) Applicant: GENERAL ELECTRIC COMPANY
1 River Road
Schenectady New York 12305(US)

(72) Inventor: Lee, Garland Garrett
110 Oakhill Road
Pittsfield Massachusetts 01201(US)

(74) Representative: Schüler, Horst, Dr. et al,
Kaiserstrasse 41
D-6000 Frankfurt/Main 1(DE)

(54) **Composition comprising a thermoplastic resin and a ketone.**

(57) Aromatic carbonate polymer in admixture with an effective mold releasing amount of a ketone.

EP 0 100 918 A1

Croydon Printing Company Ltd

TITLE MODIFIED
see front page



# COMPOSITIONS

## BACKGROUND OF THE INVENTION

Useful articles from various thermoplastic resins have been prepared from molds for many years. Injection molding provides a convenient way for preparing various articles from thermoplastic resins, particularly objects of a relatively intricate nature. In order to injection mold articles in an economic manner the mold resident cycle time should be kept to a minimum. This shorter cycle time provides a shorter resin heat period with consequently less thermal damage to the resin itself and/or less thermal promoted interaction between the resin and various additives present in the resin. In order to accomplish a release of the resin from the mold, various mold release agents have been found which provide for a release of the resin with lower ejection pressure. Such an agent should be chemically compatible with the resin as measured by the usual characteristics of the resin under normal conditions and heat treatments.

Of the thermoplastic resins which find a mold release agent useful from time to time one of the most sensitive to chemical interaction is the polycarbonates.

A series of patents disclosing the use of carboxylic acid esters as mold release agents for polycarbonates have been recently issued, U.S. 4,065,436; 3,836,499; 4,131,575 and 3,784,595. Additionally carboxylic acid esters have been known as plasticizers for polycarbonate in U.S. 3,186,961. Still further Japanese patent publication No. 47-41092 discloses various esters including butyl stearate and the natural product beeswax as mold release agents for polycarbonate.

A new class of mold release agents for thermoplastic resins in general and aromatic carbonate polymers in particular has been discovered.

SUMMARY OF THE INVENTION

In accordance with the invention, there is a composition comprising a thermoplastic resin in admixture with an injection mold releasing effective amount of a ketone of the formula

$$R_1\overset{\overset{O}{\|}}{C}R_2 \qquad \text{I}$$

wherein $R_1$ and $R_2$ are the same or different and are selected from the group consisting of alkyl of from one to about thirty-nine carbon atoms, inclusive, or alkenyl of from three to about thirty-nine carbon atoms, inclusive, with the provisos that:

(1) $R_1$ and $R_2$ are selected so that the ketone is substantially non-volatizable under molding conditions,

(2) the total number of carbon atoms is no more than about forty,

(3) the unsaturation of the alkenyl is not on a carbon atom alpha to the carbon atom bearing the oxygen.

Examples of various thermoplastic resins which are within the invention include polycarbonates, polyesters, polysulfones, polyethersulfones, polyamides, polysulfides, polyacrylates, polyurethanes, polyolefins, polyvinylhalides, acrylonitrile butadiene styrene, butadiene styrenes, methacrylate butadiene styrenes and the like and blends of the above with each other or a further thermoplastic resin. The preferred thermoplastic resin is an aromatic carbonate polymer.

Aromatic carbonate polymers are prepared in the conventional manner by reacting a dihydric phenol with a carbonate precursor in an interfacial polymerization process or transesterification. Typical of some of the dihydric phenols that may be employed in the practice of this invention are 2,2-bis(4-hydroxyphenyl)propane (bisphenol-A), (2,2-bis(4-hydroxy-3-methylphenyl)propane, 4,4-bis(4-hydroxyphenyl)heptane, 2-2(3,5,3',5'-tetrachloro-4,4'-dihydroxydiphenyl)propane, 2,2-(3,5,3',5'-tetrabromo-4,4'-dihydroxydiphenyl)propane, (3,3'-dichloro-4,4'-dihydroxyphenyl)methane, bis 4-hydroxy phenyl sulfone and bis 4-hydroxy phenyl sulfide. Other dihydric phenols of the bisphenol type are also available and are disclosed in U.S. Patent Nos. 2,999,835; 3,028,365 and 3,334,154. Bisphenol-A is preferred.

It is, of course, possible to employ two or more different dihydric phenols or a copolymer of a dihydric phenol with a glycol or with hydroxy or acid terminated polyester, or with a dibasic acid in the event a carbonate copolymer or interpolymer rather than a homopolymer is desired for use in the preparation of the aromatic carbonate polymers of this invention. Also employed in the practice of this invention may be blends of any of the above materials to provide the aromatic carbonate polymer.

The carbonate precursor may be either a carbonyl halide, a carbonate ester or a haloformate. The carbonyl halides which can be employed herein are carbonyl bromide, carbonyl chloride and mixtures thereof. Typical of the carbonate esters which may be employed herein are diphenyl carbonate, di-(halophenyl) carbonates such as di(chlorophenyl) carbonate, di-(bromophenyl) carbonate, di-(trichlorophenyl) carbonate, di-(tribromophenyl) carbonate, etc., di-(alkylphenyl) carbonate such as di(tolyl) carbonate, etc., di-(naphthyl) carbonate, di-(chloronaphthyl) carbonate, phenyl tolyl carbonate, chlorophenyl chloronaphthyl carbonate, etc., or mixtures thereof. The haloformates suitable for use herein include bis-haloformates of dihydric phenols (bis-chloroformates of hydroquinone), or glycols (bis-haloformates of ethylene glycol, neopentyl glycol, polyethylene glycol, etc.). While other carbonate precursors will occur to those skilled in the art, carbonyl chloride, also known as phosgene, is preferred.

The aromatic carbonate polymers of this invention may be prepared by employing a molecular weight regulator, an acid acceptor and a catalyst. The molecular weight regulators which can be employed in carrying out the process of this invention include monohydric phenols such as phenol, chroman-I, paratertiarybutylphenol, parabromophenol, primary and secondary amines, etc.

A suitable acid acceptor may be either an organic or an inorganic acid acceptor. A suitable organic acid acceptor is a tertiary amine and includes such materials as pyridine, triethylamine, dimethylaniline, tributylamine, etc. The inorganic acid acceptor may be one which can be either a hydroxide, a carbonate, a bicarbonate, or a phosphate or an alkali or alkaline earth metal.

The catalysts which are employed herein can be any of the suitable catalysts that aid the polymerization of bisphenol-A with phosgene. Suitable catalysts include tertiary amines such as, for example, triethylamine, tripropylamine, N,N-dimethylaniline, quaternary ammonium compounds such as, for example, tetraethylammonium bromide, cetyl triethyl ammonium bromide, tetra-n-heptyl-ammonium iodide, tetra-n-propyl ammonium; bromide, tetramethylammonium chloride, tetramethyl ammonium hydroxide, tetra-n-butylammonium iodide, benzyltrimethylammonium chloride and quaternary phosphonium compounds such as, for example, n-butyltriphenyl phosphonium bromide and methyltriphenyl phosphonium bromide.

Also included herein are branched polymers wherein a polyfunctional aromatic compound is reacted with the dihydric phenol and carbonate precursor to provide a thermoplastic randomly branched polycarbonate polymer.

These polyfunctional aromatic compounds contain at least three functional groups which are carboxyl, carboxylic anhydride, haloformyl, hydroxyl (polyfunctional phenols) or mixtures thereof. Examples of these poly-functional aromatic compounds which may be employed in the practice of this invention include: trimellitic anhydride, trimellitic acid, trimellityl trichloride, 4-chloroformyl phthalic anhydride, pyromellitic acid, pyromellitic dianhydride, mellitic acid, mellitic anhydride, trimesic acid, benzophenonetetracarboxylic acid, benzophenonetetracarboxylic anhydride and the like. The preferred polyfunctional aromatic compounds are trimellitic anhydride or trimellitic acid, or their haloformyl derivatives.

Also, included herein are blends of a linear polymer and a branched polymer.

Within the definition of aromatic carbonate polymers are also copolyester-carbonates, that is the polymer made from a dihydric phenol, a dibasic acid and a phosgene precursor. U.S. Patent 3,169,121 covering copolyestercarbonates and methods of preparing them is hereby incorporated by reference.

The method of preparing the thermoplastic resins other than the aromtic polycarbonates are equally well known, consequently no detailed procedures of preparation are necessary.

The mold release agents of this invention are ketones of Formula I. Alkyl as used throughout this specification and claims includes normal and branched alkyl groups. Illustrative examples of alkyl groups include methyl, ethyl, isobutyl, 2,4-diethylnonyl, 4-t.butyldodecyl, octadecyl, 3,7-dimethyleicosyl, heptacosanyl, triacontyl, tricosyl and the like.

Alkenyl as used throughout this specification and claims includes propenyl, 3-butenyl, 3-isobutenyl, 4-octenyl, 5-dodecenyl, cis-9-octadecenyl, 3,5-diethyldecen-3-yl, 4-tricosenyl and the like.

Preferred compounds of Formula I have from about 16 to about 30 carbon atoms, inclusivein $R_1$ and $R_2$. Alkyl groups are generally preferred over alkenyl groups. Of the alkyl groups, normal alkyl is preferred over branched alkyl. Asymmetric ketones, for example, wherein $R_1$ has one to six carbon atoms, inclusive, and $R_2$ has a substantially greater number of carbon atoms, generally from about 14 to about 26 are also preferred.

As mentioned previously the total number of carbon atoms should be such that the ketone is essentially non-volatizable at processing conditions. In order for the ketone to perform its function as a mold release agent it must be present in the polymer melt at processing temperature. When unsaturation is also present in the ketone, the unsaturation should not be on a carbon atom alpha to the carbon atom bearing the oxygen. When unsaturation is alpha to the carbon atom bearing the oxygen, degradation of the ketone can occur at processing conditions.

An effective mold releasing amount of the ketone is employed in the thermoplastic composition. Any amount of ketone which reduces the amount of pressure needed to eject the article from the injection mold and obtain an unblemished article in comparison to the pressure needed to eject the thermoplastic composition control (i.e., no ketone) is an effective mold releasing amount. In general, effective amounts of the ketone are from about 0.01 to about 2.0 weight percent, based on the quantity of thermoplastic resin present, preferably from about 0.05 to about 0.5 weight percent. The ketone can be added to the resin in the normal manner that the other additives are added, for example, in the dry stage and

coextruded or in a solvent and melt extruded with the resin..

Other additives in common use in the thermoplastic resins may also be employed. For example with respect to aromatic polycarbonate, additives which are commonly known to stabilize the resin thermally such as a phosphite can be employed. Hydrolytic stabilizers such as epoxides may also be employed as well as agents which are flame retardants, drip inhibitors, ductility enhancer antioxidants, solvent resistance enhancer, ultraviolet light stabilizers and various inert fillers. Active fillers and pigments can be used with passivating agents and treatments.

Below is a specific example of the invention compound with control and other known mold release agents. The examples are intended to illustrate but not narrow the inventive concept. All percentages of the additives are in weight percent of the thermoplastic resin.

EXAMPLE 1

In all the ensuing examples the aromatic polycarbonate is Lexan® 140, a polymer produced by reacting bisphenol-A and phosgene. The mold release agent was dry formulated into the polycarbonate at levels of 0.3 weight percent unless otherwise stated. Also present in the composition is 0.03 weight percent of a phosphite stabilizer.

EXAMPLE 2

In a 125 ton Cincinnati injection molding machine with a 4 ounce shot capacity, various mold release agents were tested. The mold used was a 3" x 3" box with a 1 1/2" wall height. It had ejector pins at four corners with one of the pins being attached to strain

gauge transducers for measuring the part ejection pressure. The mold was designed with very little draft so that the part would tend to stick to the core unless mold release is used. To vary the amount of shrinkage on the core, the temperature of the stationary and moving mold halves could be varied.

The molding conditions employed were those below:

TABLE 1

| | |
|---|---|
| Clamp Conditions: | |
| Clamp Pressure psi/ton | 125 |
| Melt Conditions: | |
| Nozzle, °F | 544 |
| Front Zone, °F | 547 |
| Middle Zone, °F | 541 |
| Back Zone, °F | 510 |
| Melt Temperature (measured),°F | 570 |
| Screw Conditions: | |
| RPM | 34 |
| Shot Size, inches | 1 5/8 |
| Injection Conditions: | |
| Injection Pressure, psi | 14,000 |
| Injection Pressure Time, sec. | 3 |
| Cushion, inches | None |
| Injection Fill Time, sec. | 2 |
| Molding Conditions: | |
| Cure Time, sec. | 40 |
| Mold Temperature (Stationary),°F | 165 |
| Mold Temperature (Moving), °F | 115 |

Below are the values in pounds per square inch in arithmetic mean plus or minus two standard deviations.

TABLE II

| MOLD RELEASE AGENT | EJECTOR PIN PRESSURE PSI $\bar{x} \pm 2\delta$ FOR 10 SHOTS |
|---|---|
| Control (no mold release agent) | Pins punched through on first shot |
| PETS[1] | 9,975 ± 143 |
| Trimethylol propane triester of $C_{20}/C_{22}$ fatty acid[2] | 8,560 ± 78 |
| Stearyl behenate[3] | 10,260 |
| Stearyl stearone[4] | 8,035 ± 196 |

1. Pentaerythritol tetrastearate
2. Humko Kemester TMP-22
3. Henkel Loxiol G-47
4. Witco stearone

The values from the above Table are significant. Polycarbonate having PETS, a commercially employed mold release agent ester requires a high amount of pressure to effect release from the mold. Various other materials also require relatively high pressures to eject the article from the mold. The most effective mold release agent tested in this example as measured by ejector pin pressure is the stearyl stearone containing composition.

EXAMPLE 3

In a manner similar to Example 1 various ketones such as butyl stearone, propyl behenone and oleyl sterone are employed as mold release agents. Similar results should be obtained.

EXAMPLE 4

In a manner similar to Example 1 the stearyl stearone and the ketones of Example 3 are added to a polyester, polysulfone, polyethersulfone, polyamide, polysulfide, polyacrylate, polyurethane, polyolefin, polyvinylhalide, acrylonitrile butadiene styrene, butadiene styrene or methacrylate butadiene styrene. Similar mold release results should be obtained.

WHAT IS CLAIMED IS:

1. A composition comprising a thermoplastic resin in admixture with an injection mold releasing effective amount of a ketone of the formula

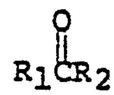

wherein $R_1$ and $R_2$ are the same or different and are selected from the group consisting of alkyl of from one to about thirty-nine carbon atoms, inclusive, or alkenyl of from three to about thirty-nine carbon atoms, inclusive, with the provisos that:

(1) $R_1$ and $R_2$ are selected so that the ketone is substantially non-volatizable under molding conditions,

(2) the total number of carbon atoms is no more than about forty,

(3) the unsaturation of the alkenyl is not on a carbon atom alpha to the carbon atom bearing the oxygen.

2. A composition in accordance with claim 1 wherein the thermoplastic resin is polyester, polysulfone, polyethersulfone, polyamide, polysulfide, polyacrylate, polyurethane, polyvinylhalide, acrylonitrile butadiene styrene, butadiene styrene, or methacrylate butadiene styrene.

3. A composition in accordance with claim 2 wherein $R_1$ and $R_2$ have from about 16 to about 30 carbon atoms.

4. A composition in accordance with claim 3 wherein $R_1$ and $R_2$ are alkyl.

5. A composition in accordance with claim 4 wherein alkyl is normal.

6. A composition in accordance with claim 5 wherein $R_1$ is from one to about six carbon atoms, inclusive, and $R_2$ is from about 14 to about 26 carbon atoms, inclusive.

7. A composition in accordance with claim 5 wherein $R_1$ and $R_2$ are stearyl.

8. A composition in accordance with claims 1, wherein the thermoplastic resin is an aromatic carbonate polymer.

9. A composition in accordance with claim 8 wherein $R_1$ and $R_2$ have from about 16 to about 30 carbon atoms, inclusive.

10. A composition in accordance with claim 9 wherein $R_1$ and $R_2$ are alkyl.

11. A composition in accordance with claim 10 wherein $R_1$ and $R_2$ are alkyl.

12. A composition in accordance with claim 11 wherein $R_1$ is from one to about six carbon atoms, inclusive, and $R_2$ is from about 14 to about 26 carbon atoms, inclusive.

13. A composition in accordance with claim 11 wherein $R_1$ and $R_2$ are stearyl.

14. A composition in accordance with claims 9, 10 or 12 wherein the aromatic carbonate polymer is derived from bisphenol-A and a carbonate precursor.

15. A composition in accordance with claims 4 or 10 wherein the quantity of ketone is from about 0.01 to 2.0 weight percent of thermoplastic resin.

European Patent Office

# EUROPEAN SEARCH REPORT

0100918
Application number

EP 83 10 6992

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 184 994 (V. MARK et al.)<br>* Claims 1,5; example I; table *<br>----- | 1-15 | C 08 K 5/07 |
| | | | TECHNICAL FIELDS SEARCHED (Int. Cl. 3) |
| | | | C 08 K<br>C 08 L |

The present search report has been drawn up for all claims

| Place of search | Date of completion of the search | Examiner |
|---|---|---|
| THE HAGUE | 02-11-1983 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82